# EUROPÄISCHE PATENTSCHRIFT

(11) **EP 3 266 543 B1**
(45) Veröffentlichungstag und Bekanntmachung des Hinweises auf die Patenterteilung: **07.08.2019**
(21) Anmeldenummer: 17174810.6
(22) Anmeldetag: 07.06.2017
(51) Int. Cl.: B21H 1/06, B21H 7/00, B23K 26/00, B23P 23/00, B23K 26/342, B22F 3/105, B33Y 10/00, B33Y 30/00, B22F 5/10, B23P 15/24, C21D 7/13, C21D 1/40

(54) **VERFAHREN UND ANLAGE ZUR KOMBINIERT ADDITIVEN UND UMFORMENDEN FERTIGUNG**
METHOD AND APPARATUS FOR COMBINING ADDITIVE MANUFACTURE AND SHAPING
PROCÉDÉ ET INSTALLATION DESTINÉS À LA FABRICATION ADDITIVE COMBINÉE À UNE MISE EN FORME

(30) Priorität: 16.06.2016 DE 102016111047
(43) Veröffentlichungstag der Anmeldung: 10.01.2018
(73) Patentinhaber: GEFERTEC GmbH, 12681 Berlin (DE); Brandenburgische Technische Universität Cottbus-Senftenberg, 03046 Cottbus (DE)
(72) Erfinder: Fischer, Georg, 99817 Eisenach (DE); Röhrich, Tobias, 03185 Turnow-Preilack (DE); Bambach, Markus, 03044 Cottbus (DE)
(74) Vertreter: Kaufmann, Sigfrid

(56) Entgegenhaltungen:
- WO-A2-2015/189600
- US-A- 6 030 199
- US-A1- 2013 197 683
- US-A1- 2014 035 423

## Beschreibung

Die Erfindung betrifft ein Verfahren und eine Anlage zum Herstellen von metallischen Formkörpern mittels eines additiven Fertigungsverfahrens, bei welchem der schichtweise Aufbau durch Abschmelzen eines Werkstoffes erfolgt, wobei die additive Fertigung mit einer Umformung in derselben Aufspannung kombiniert wird.

Additive Fertigungsverfahren - auch bekannt unter den Bezeichnungen "generative Fertigung" oder "3D-Druck" - kamen in den letzten Jahren immer mehr in den Fokus der Werkzeugmaschinenbauer. Für die Herstellung metallischer Bauteile sind unterschiedliche Techniken der additiven Fertigung bekannt, beispielsweise das selektive Lasersintern (SLS), das selektive Laserschmelzen (SLM) oder das Auftragschweißen.

Ein Nachteil generativ gefertigter Formkörper ist deren Oberflächenstruktur, die maßgeblich durch den schichtweisen Aufbau charakterisiert ist. Um die gewünschte Präzision in der geometrischen Form und Oberflächengüte der Bauteile zu erzielen, ist somit meist eine, z. B. spanende, Nachbearbeitung notwendig.

Beispielsweise ist die Kombination von Laserauftragschweißen und Fräsen in einer einzigen Werkzeugmaschine bekannt (Fa. DMG MORI, Werkzeugmaschine LASER-TEC 65 AM), wobei Bauteile additiv durch Laserauftragschweißen hergestellt und anschließend, d. h. nach einem Werkzeugwechsel, in der gleichen Aufspannung durch Fräsoperationen nachbearbeitet werden. Hierbei ist von Nachteil, dass die Fertigungsschritte nur sequentiell und nicht zeitgleich erfolgen können.

Ein weiterer Nachteil der an die generative Fertigung anschließenden spanenden Nachbearbeitung sind die sich insbesondere bei großvolumigen Bauteilen oder schwer bearbeitbaren Werkstoffen ergebenden Fertigungshindernisse, die einer sinnvollen Nutzung generativer Verfahren im Wege stehen. Diese Fertigungshindernisse betreffen zum Beispiel eine für die Werkzeuge unzureichende Zugänglichkeit zur Bearbeitungsstelle oder eine schlechte mechanische Bearbeitbarkeit.

Aus DE 10 2014 014 202 A1 ist die Kombination von Laserauftragschweißen und inkrementeller Umformung speziell mit der Zielstellung einer verbesserten Oberflächengüte bekannt. Hier werden vorgefertigte Bleche in ihre finale Form umgebogen und bedarfsweise an lokalen Bereichen mittels Laserauftragschweißen verdickt, um z. B. Verstärkungsrippen herzustellen oder Anschraubkonsolen aufzubringen. Allerdings wird bei diesem Verfahren die verbesserte Oberflächengüte durch die Verwendung vorgefertigter Bleche erzielt, die mittels additiver Verfahren aufgebrachten Verdickungen kranken nach wie vor an der für diese Verfahren typischen rauen Oberfläche. Außerdem müssen die Bearbeitungswerkzeuge (für den 3D-Druck und die inkrementelle Umformung) über Werkzeugwechsler jeweils eingewechselt werden und können daher nicht parallel verwendet werden.

WO 2015 / 189600 A2 zeigt eine Fräsmaschine mit einem zweiten, unabhängig vom Fräskopf ansteuerbaren Bearbeitungskopf. Dieser zweite Bearbeitungskopf kann ein 3D-Druckkopf mit zusätzlichen Walzen zum Warmwalzen des abgeschiedenen Materials sein. Es sind zwei seitlich an der Formkörperwand und eine von oben auf die Wand einwirkende Walzen gezeigt. Die Druckumformung dient hierbei nur zur Änderung der Gefügestruktur.

Aus US 2013 / 0197683 A1 ist die Kombination von Laserauftragschweißen und plastischer Umformung speziell mit der Zielstellung einer verbesserten Oberflächengüte bekannt. Hier werden Formkörper schichtweise aufgebaut, wobei zwei seitlich angeordnete, vertikale und eine oben angeordnete, horizontale Mikrowalzen unmittelbar hinter dem Schmelzbad am noch zähflüssigen Werkstoff entlanggeführt werden. Ziel ist das Vermeiden von Herunterfließen des Werkstoffes nach dem Abscheiden und ggf. in die vorgegebene Form bringen. Aus diesem Grunde darf der Werkstoff während des Walzens noch nicht erstarrt, d. h. fest, sein.

Die Aufgabe der Erfindung ist es, in einer einzigen Anlage ein umformendes Verfahren direkt in den generativen Fertigungsprozess derart zu integrieren, dass eine Nachbearbeitung der generativ hergestellten Bauteile insbesondere im Hinblick auf die Oberflächenrauigkeit überflüssig wird, sodass die Gesamtbearbeitungszeit für die generative Fertigung gesenkt und außerdem die mechanisch-technologischen Eigenschaften der gefertigten Formkörper verbessert werden können.

Die Lösung dieser Aufgabe erfolgt durch ein Verfahren zur kombiniert additiven und umformenden Fertigung mit den kennzeichnenden Merkmalen des Anspruches 1 und durch eine Anlage mit den kennzeichnenden Merkmalen des Anspruchs 6. Zweckmäßige Weiterbildungen der Erfindung sind Gegenstand der Unteransprüche.

Gemäß der Offenbarung wird ein metallischer Formkörper additiv, insbesondere durch Auftragschweißen, z. B. aus einem draht- oder bandförmigen, an der Spitze unter Energiezufuhr, vorzugsweise mit einem Lichtbogen, abzuschmelzenden Werkstoff schichtweise auf einer Bauplattform aufgebaut, wobei bevorzugt während der additiven Fertigung (ggf. zusätzlich auch im Anschluss an die additive Fertigung) eine Oberflächenbearbeitung mittels Walzens bzw. Schmiedens, d. h. mittels Druckumformens, erfolgt. Verfahrensimmanent verbleibt somit der Formkörper bzw. die bereits aufgebauten Schichten während des Umformens auf der Bauplattform, d. h., das Umformen wird in derselben Aufspannung wie die additive Fertigung ausgeführt.

Die Oberflächenbearbeitung erfolgt mittels Walzens unmittelbar nach dem Abscheiden und Erstarren des metallischen Werkstoffes. Die Umformung wird also bevorzugt zeitgleich mit dem Abscheiden an einer Position unmittelbar hinter der Erstarrungsfront des schmelzflüssig abgeschiedenen Werkstoffes durchgeführt. Somit werden die Prozessschritte "Abscheiden" und "Umformen" parallel und unterbrechungsfrei (d. h. nicht wechselweise, wie aus dem Stand der Technik bekannt) ausgeführt.

Hierbei kann vorgesehen sein, während des Abscheidens jeweils einer Lage zumindest diese Lage unter Verwendung von Walzen umzuformen. Es kann auch vorgesehen sein, mehr als eine Lage additiv abzuscheiden, wobei die umformende Bearbeitung erst nach dem Abscheiden wenigstens einer vollständigen Lage erfolgt, und zwar, während die darauffolgende Lage abgeschieden wird (d. h., die Druckumformung erfolgt, nachdem zwei oder mehr Lagen mittels der additiven Fertigung erzeugt worden sind).

Die Druckumformung erfolgt durch paarweise Anordnung von Walzen und/oder durch einzelne Walzen, die gegen die Oberfläche des in der Richtung der Druckausübung fixierten Formkörpers presst.

Indem die Walzen mit nur geringer zeitlicher Verzögerung nach der Erstarrung des schmelzflüssig abgeschiedenen Werkstoffes über die Fertigungsebene geführt werden, kann die noch im Material vorliegende Restwärme und die damit einhergehende leichtere plastische Verformbarkeit für die Umformung ausgenutzt werden, wodurch auch eine gezielte Verdichtung und Gefügebeeinflussung durch Rekristallisation ermöglicht wird.

Unter dem nachfolgend verwendeten Begriff "Fertigungsebene" ist diejenige Schicht des im (schichtweisen) Aufbau befindlichen Formkörpers zu verstehen, die gerade bearbeitet bzw. aufgebaut wird, d. h. in die unmittelbar der Wärmeeintrag durch den Prozess des Aufschmelzens bzw. den schmelzflüssig aufgebrachten Werkstoff erfolgt.

Die Walzen zur umformenden Bearbeitung werden entlang der Seitenwände des aufzubauenden Formkörpers bzw. den Seitenwänden von Formkörper-Teilbereichen in einem Winkel (z. B. 90°) zur Fertigungsebene, d. h. seitlich (z. B. horizontal) drückend, über die erstarrte Lage bzw. einen Schichtstapel von erstarrten Lagen geführt. Hierbei ist es vorgesehen, jeweils zwei Walzen, d. h. Walzenpaare, zu verwenden, wobei die umzuformende Wand des Formkörpers zwischen den Walzen jedes Walzenpaares angeordnet ist. Somit wirkt jeweils zwischen zwei Walzen eines Walzenpaares während des Umformens eine Kraft mit einer Komponente in horizontaler Richtung auf den Formkörper bzw. dessen fertiggestellte Lagen.

Indem die Walzen entlang der durch die Schichtstruktur des schichtweisen Aufbaus geprägten Seitenwände geführt werden, ist eine Glättung der Oberfläche ermöglicht, sodass die Schichtstruktur unsichtbar wird.

Zusätzlich kann wenigstens eine Walze zur umformenden Bearbeitung in einer Ebene parallel zur Fertigungsebene, d. h. von oben drückend, über die in der Fertigungsebene erstarrte Lage geführt werden. Somit wirkt eine während des Druckumformens ausgeübte Kraftkomponente in einer lotrechten Richtung auf den Formkörper bzw. die fertiggestellten Lagen. Hierbei ist durch die gleichzeitig seitlich auf die erstarrten Schichten einwirkenden Walzen ein seitliches "Ausfließen" des von der lotrecht pressenden Walze plastisch verformten Werkstoffes verhindert bzw. unmittelbar korrigierbar.

Ein weiterer Vorteil der Bearbeitung mittels Druckumformens ist, dass eine Veränderung des Gefüges des durch die additive Fertigung schmelzflüssig abgeschiedenen und zu dem Formkörper erstarrten Werkstoffes ermöglicht wird. Beispielsweise wird bei der additiven Fertigung mittels Auftragschweißens aus dem ursprünglichen Gussgefüge, das dem Auftragschweißen inhärent ist, ein Walzgefüge, das z. B. durch eine höhere Härte geprägt ist. Eine gezielte Verdichtung und Gefügebeeinflussung durch Rekristallisation ermöglicht also, die mechanischen Eigenschaften nach entsprechenden Vorgaben einzustellen.

Neben diesen Punkten besteht ein zusätzlicher Vorteil der Erfindung auch darin, dass in ein und derselben Anlage, d. h. innerhalb nur eines Bezugssystems, generativ hergestellte Bauteile zugleich umformtechnisch bearbeitet werden können. Dadurch werden die Vorteile der Umformtechnik (Oberflächengenauigkeit, Verbesserung der mechanisch-technologischen Eigenschaften) mit denen der generativen Fertigung (lagenweiser Aufbau, im Prozess anpassbares Werkstoffsystem, optimierter Werkstoff- und Energieeinsatz) verbunden. Darüber hinaus ergeben sich erhebliche Zeitvorteile, da der umformtechnische Fertigungsschritt die Kühlung des Bauteils nach der generativen Fertigung, beispielsweise aufgrund kühlend wirkender Walzen, unterstützen kann.

Es ist vorgesehen, den Formkörper während des Umformens zu temperieren, d. h. zu kühlen oder insbesondere zu erwärmen. Die Temperierung erfolgt unter Verwendung eines Wärmeübertragungsmediums, das die fertiggestellten Bereiche des Formkörpers umströmt, wobei zusätzlich eine Temperierung über die ebenfalls temperierbare Bauplattform ermöglicht sein kann.

Hierbei kann insbesondere vorgesehen sein, dass die temperierbare Bauplattform während der Fertigung auf eine Bauplattform-Temperatur gekühlt wird, während der Formkörper zumindest im Bereich der Fertigungsebene mittels des Wärmeübertragungsmediums auf einer Temperatur gehalten wird, die größer als die Bauplattform-Temperatur ist.

Gemäß der Offenbarung werden in wechselnder Abfolge wenigstens zwei unterschiedliche Werkstoffe abgeschieden, sodass in einer Fertigungsebene aneinander grenzende Bereiche mit jeweils unterschiedlichen Werkstoffen ausgebildet sind und/oder jede Lage aus einem zu wenigstens einer benachbarten Lage unterschiedlichen Werkstoff besteht. Hierbei kann das Umformen zum Beispiel intermittierend nur während des Abscheidens eines vorgegebenen der unterschiedlichen Werkstoffe erfolgen.

Die Anlage zur Durchführung des Verfahrens zur kombiniert additiven und umformenden Fertigung umfasst eine Bauplattform, einen Bearbeitungskopf mit wenigstens einer Werkstoffzuführeinrichtung zum Zuführen von schmelzbarem Werkstoff zur Fertigungsebene sowie einem Umformwerkzeug, eine Energiequelle zum Aufschmelzen des Werkstoffes und eine Steuer- und Regeleinrichtung, die mindestens mit der Energiequelle, der Werkstoffzuführeinrichtung und dem Umformwerkzeug elektrisch verbunden ist. Der Bearbeitungskopf ist zumindest in lotrechter Richtung (z-Richtung) bewegbar, während die Bauplattform wenigstens um eine Rotationsachse, die bevorzugt lotrecht ausgerichtet ist, mit einer unbegrenzten Anzahl von Rotationen drehbar ist.

Außerdem umfasst die Anlage einen flüssigkeitsdichten, kastenförmigen, d. h. nach allen Seiten abgeschlossenen, oder wannenförmigen, d. h. nach oben offenen, Bauraum, in dessen Bodenbereich die, z. B. kreisplattenförmige, Bauplattform angeordnet ist.

Die Energiequelle zum Aufschmelzen des Werkstoffes ist vorzugsweise ein von einer Hochspannungsquelle erzeugter Lichtbogen zwischen dem zugeführten, z. B. drahtförmigen, Werkstoff und dem Formkörper bzw. der geerdeten Bauplattform. Die Energiequelle kann aber auch ein von einem Laser emittierter Laserstrahl oder ein von einer Elektronenkanone erzeugter Elektronenstrahl sein.

Das Umformwerkzeug umfasst ein oder mehrere Walzen zum Umformen des auf der Bauplattform aufzubauenden, metallischen Formkörpers. Einzelne und/oder zu Gruppen zusammengefasste (und dadurch mechanisch miteinander verbundene) Walzen, im Folgenden als Walzwerkzeug bezeichnet, sind unabhängig (von den anderen Walzen, Walzwerkzeugen und der Werkstoffzuführeinrichtung) in mindestens zwei Freiheitsgraden (z. B. einem translatorischen und einem rotatorischen Freiheitsgrad) bewegbar, d. h. die Walzen können an eine umzuformende Position an den Formkörper herangeführt und gegen diesen mit einer vorzugebenden Anpresskraft gepresst werden. Während des Umformens ist mittels eines oder mehrerer, mit der Steuer- und Regeleinrichtung verbundenen Antriebssysteme eine Relativbewegung zwischen den Walzen des Umformwerkzeuges und dem Formkörper entweder durch angetriebene Bewegung des Bearbeitungskopfes und/oder der Bauplattform und/oder der Walzen und der Walzwerkzeuge ermöglicht.

Die Walzen sind während des Umformens von der Steuer- und Regeleinrichtung nach Maßgabe der für den Aufbau des Formkörpers hinterlegten Geometriebeschreibungsdaten entlang der Seitenwände bzw. umzuformenden Teilbereiche des Formkörpers führbar.

Der Walzspalt kann durch paarweise Anordnung zylindrischer, konischer oder profilierter Walzen oder zwischen einer Walze und der (durch die Bauplattform) fixierten Oberfläche des Formkörpers gebildet sein.

Das Umformwerkzeug umfasst mindestens ein Walzenpaar, gebildet aus zwei parallel zueinander versetzt angeordneten Walzen, wobei mittels der Walzen des Walzenpaares ein Druck entlang einer Verbindungslinie zwischen den Längsachsen der zwei Walzen ausbildbar ist, d. h. beispielsweise eine Wand des Formkörpers zwischen diesen zwei Walzen des Walzenpaares druckumformbar ist.

Die Walzen bestehen zumindest an ihrer Außenseite aus einem Material mit einer hohen Wärmeleitfähigkeit von mehr als 200 W/(m · K), zum Beispiel einer Keramik wie Siliciumcarbid. Dadurch ist es ermöglicht, dass die mit dem Formkörper in Kontakt stehenden Walzen die im Formkörper ggf. auftretende, inhomogene Wärmeverteilung vergleichmäßigen bzw. Wärmeenergie schnell zu- oder abführen können.

Das Umformwerkzeug kann außerdem eine Walze oder ein Walzwerkzeug umfassen, mittels dessen mit einer im Wesentlichen vertikal ausgerichteten Anpresskraft, d. h. von oben, auf die erstarrten Schichten des Formkörpers einwirkbar ist. Somit kann in vorteilhafter Weise die Gefügestruktur durch Druckeinwirkung von drei Seiten modifiziert werden.

Gemäß einer Ausgestaltungsvariante ist die Umformeinrichtung als ein dem Fachmann bekanntes Ringwalzwerk ausgebildet, mittels dessen unter Rotation der Bauplattform rotationssymmetrische Formkörper, beispielsweise Rohrabschnitte, herstellbar sind. Dies ermöglicht zudem das unterbrechungsfreie Abscheiden (und Umformen) während der gesamten Fertigung, da die übereinanderliegenden Schichten kontinuierlich (d. h. ohne für jede neue Schicht erneut ansetzen zu müssen) hergestellt werden können.

Weiterhin kann vorgesehen sein, dass die erfindungsgemäße Anlage eine Zuführung zum Zuführen eines Wärmeübertragungsmediums an oder auf den Formkörper aufweist. Hierzu können mit einem Ventil oder einem Masseflusskontroller regelbare Zuleitungen in den flüssigkeitsdichten Bauraum der Anlage einmünden und ebenfalls mit einem Ventil oder einem Masseflusskontroller regelbare Ableitungen aus dem Bauraum herausführen, sodass der Formkörper mittels einer in den Bauraum eingebrachten, z. B. korrosionsverhütenden, Flüssigkeit temperierbar ist. Außerdem ist es so möglich, den Formkörper in einem "Flüssigkeitsbad" zu fertigen.

Gleichfalls sind die Bauplattform und/oder die Walzen des Umformwerkzeuges mittels einer elektrischen Heizung, einer elektrischen Kühlung (z. B. mit Peltierelementen) oder eines integrierten Kanalsystems, durch welches (zum Zweck der Kühlung oder Erwärmung) ein Wärmeübertragungsfluid leitbar ist, temperierbar sein.

Weiterhin kann vorgesehen sein, dass die Steuer- und Regeleinheit einen Algorithmus aufweist, welcher die Geometriebeschreibungsdaten für die additive Fertigung leicht modifiziert, sodass Wandstärken des Formkörpers entsprechend der zu erwartenden Maßänderungen aufgrund des Umformens neu berechnet werden.

Die Erfindung wird nachfolgend anhand von Ausführungsbeispielen näher erläutert, wobei gleiche oder ähnliche Merkmale mit gleichen Bezugszeichen versehen sind. Dazu zeigen in schematischer Darstellung die
- Fig. 1:: eine Ausführungsform des Verfahrens und der Anlage zur kombiniert additiven und umformenden Fertigung;
- Fig. 2:: eine weitere Ausführungsform des Verfahrens und der Anlage zur kombiniert additiven und umformenden Fertigung; und
- Fig. 3:: eine dritte Ausführungsform zur Herstellung rotationssymmetrischer Formkörper.

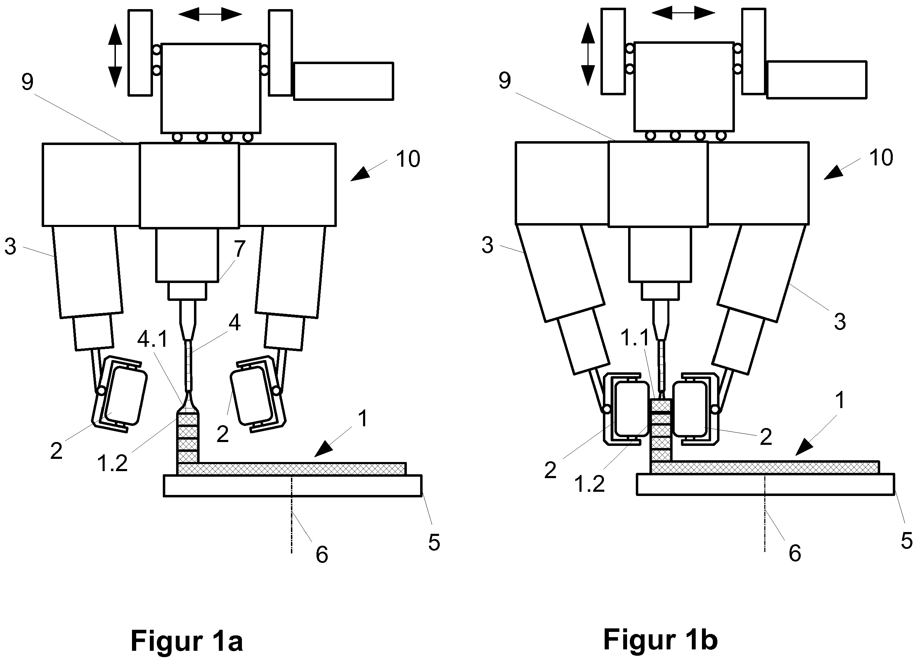

Die Anlage gemäß Figur 1 zur kombiniert additiven und umformenden Fertigung des Formkörpers 1 umfasst den Bearbeitungskopf 10 mit der Steuer- und Regeleinrichtung 9 und die um die Rotationsachse 6 drehbare Bauplattform 5, auf welcher der Formkörper 1 lagenweise aufgebaut wird. Hierzu wird der drahtförmige Werkstoff 4 mittels der Werkstoffzuführeinrichtung 7 von oben zu der bereits erstarrten Schicht 1.2 herangeführt und an der Drahtspitze mittels Lichtbogens (nicht dargestellt) aufgeschmolzen. Der schmelzflüssige Werkstoff 4.1 wird auf die bereits erstarrte Schicht 1.2 abgeschieden und erstarrt dort.

In Figur 1a sind die Walzen 2 des Umformwerkzeuges 3 von der im Aufbau befindlichen Wand des Formkörpers 1 noch abgehoben. Sobald ein erster Bereich der neu aufgebrachten Schicht 1.1 erstarrt ist, werden die Walzen 2, wie in Figur 1b gezeigt, gegen die Schicht 1.1 und die darunter liegende Schicht 1.2 gepresst und somit druckumgeformt.

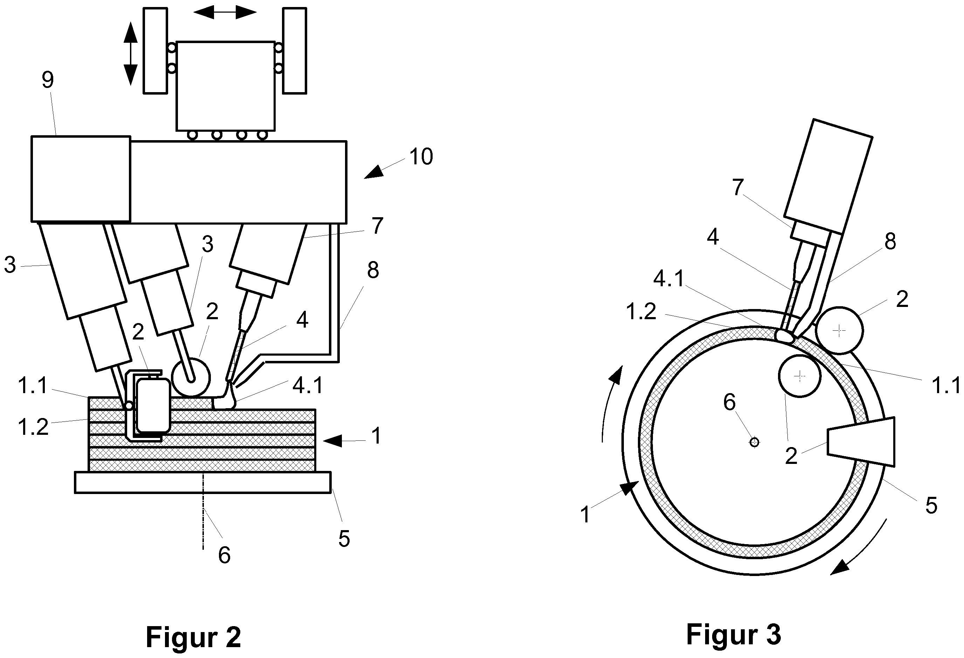

Die Anlagenvariante gemäß Figur 2 zur kombiniert additiven und umformenden Fertigung des Formkörpers 1 umfasst neben dem Bearbeitungskopf 10 und der Bauplattform 5, auf welcher der Formkörper 1 lagenweise aufgebaut wird, horizontal (d. h. seitlich) und lotrecht (d. h. von oben) auf den Formkörper 1 einwirkende Walzen 2. Die Walzen 2 sind derart angeordnet, dass der von dem mittels der Werkstoffzuführeinrichtung 7 der zu fertigenden Schicht 1.1 zugeführte, drahtförmige Werkstoff 4, der in schmelzflüssiger Phase 4.1 abgeschieden wird und unter Zufuhr von aus der Kühlmittelzufuhr 8 strömendem Kühlmittel (nicht dargestellt) erstarrt, unmittelbar nach seiner Erstarrung innerhalb der Schicht 1.1 druckumformend bearbeitet wird. Hierbei wirken die seitlich angeordneten Walzen 2 auch auf die Schicht 1.2 ein, die unter der gerade in Fertigung befindlichen Schicht 1.1 angeordnet ist.

Figur 3 zeigt in Draufsicht die Fertigung eines rotationssymmetrischen Formkörpers 1 auf der um die Rotationsachse 6 kontinuierlich rotierenden (durch die bogenförmigen Pfeile symbolisiert) Bauplattform 5. Aufgrund der Rotation wird ohne Unterbrechung der schmelzförmige Werkstoff 4.1 auf die erstarrte Schicht 1.2 aufgebracht. Der zu der auf der Schicht 1.2 angeordneten Schicht 1.1 erstarrte Werkstoff 4.1 wird mittels der Walzen 2 (in der Figur 3 sind eine Hauptwalze, eine Dornwalze und eine Axialwalze dargestellt) druckumgeformt.

### Bezugszeichenliste

- 1: Formkörper
- 1.1: Schicht des Formkörpers, in Bearbeitung
- 1.2: Schicht des Formkörpers, bereits fertiggestellt
- 2: Walze
- 3: Umformwerkzeug
- 4: Werkstoff, drahtförmig
- 4.1: schmelzflüssiger Werkstoff
- 5: Bauplattform
- 6: Rotationsachse
- 7: Werkstoffzuführeinrichtung
- 8: Kühlmittelzufuhr
- 9: Steuer- und Regeleinrichtung
- 10: Bearbeitungskopf

## Patentansprüche

1. Verfahren zur kombiniert additiven und umformenden Fertigung metallischer Formkörper (1), wobei
- der Formkörper (1) durch Aufschmelzen von mindestens einem metallischen Werkstoff (4) und Abscheiden des Werkstoffs in schmelzförmiger Phase (4.1) schichtweise nach Maßgabe von Geometriebeschreibungsdaten hergestellt wird;
- der abgeschiedene Werkstoff (4.1) mittels eines Umformwerkzeuges (3), umfassend wenigstens zwei an den Formkörper herangeführte Walzen (2), nach Maßgabe der Geometriebeschreibungsdaten umgeformt wird,
**dadurch gekennzeichnet, dass**
- der abgeschiedene Werkstoff (4.1) nach seiner Erstarrung auf der darunterliegenden Schicht (1.2) umgeformt wird, wobei die Walzen (2) des Umformwerkzeuges (3) unmittelbar nach dem Abscheiden und Erstarren des abgeschiedenen Werkstoffs (4.1) an eine umzuformende Position an den Formkörper herangeführt werden;
- das Umformen erfolgt, indem mindestens ein Walzenpaar, das jeweils aus zwei der Walzen (2) gebildet ist, seitlich entlang der zuletzt abgeschiedenen Schicht (1.1) und wenigstens einer der darunterliegenden Schichten (1.2) geführt wird, wobei die Schichten (1.1, 1.2) zwischen den beiden, Druck mit einer Komponente in horizontaler Richtung auf die erstarrten Schichten (1.1, 1.2) ausübenden Walzen (2) des Walzenpaares angeordnet sind;
- der Formkörper (1) zumindest während des Umformens temperiert wird,
- wobei die Temperierung mittels einer den Formkörper (1) zumindest teilweise umschließenden Wärmeübertragungsflüssigkeit durchgeführt oder unterstützt wird.

2. Verfahren nach Anspruch 1, **dadurch gekennzeichnet, dass** das verwendete Umformwerkzeug (3) wenigstens drei Walzen (2) umfasst, wobei beim Umformen eine Walze (2) in lotrechter Richtung auf die erstarrten Schichten (1.1, 1.2) pressend über dieselben geführt wird.

3. Verfahren nach einem der vorstehenden Ansprüche, **dadurch gekennzeichnet, dass** zeitgleich mit dem Abscheiden die Umformung an einer Position unmittelbar hinter der Erstarrungsfront des schmelzflüssig abgeschiedenen Werkstoffes (4.1) erfolgt.

4. Verfahren nach einem der vorstehenden Ansprüche, **dadurch gekennzeichnet, dass** der Formkörper (1) auf einer um eine Drehachse rotierbaren Bauplattform (5) hergestellt wird, wobei der schmelzförmig abgeschiedene Werkstoff (4.1) nach seiner Erstarrung unter Rotation der Bauplattform (5) umgeformt wird.

5. Verfahren nach einem der vorstehenden Ansprüche, **dadurch gekennzeichnet, dass** in wechselnder Abfolge wenigstens zwei unterschiedliche Werkstoffe (4) abgeschieden werden, wobei das Umformen zwischen jedem Wechsel des Werkstoffes (4) erfolgt.

6. Anlage zur kombiniert additiven und umformenden Fertigung metallischer Formkörper (1) mittels Abscheidens wenigstens eines schmelzbaren blech-, draht- oder pulverförmigen Werkstoffes (4), aufweisend eine Bauplattform (5), einen zumindest in lotrechter Richtung bewegbaren Bearbeitungskopf (10) mit mindestens einer Werkstoffzuführeinrichtung (7) zur Zuführung des Werkstoffes (4), eine Energiequelle zum Aufschmelzen des Werkstoffes (4), eine Steuer- und Regeleinrichtung (9), einen wannen- oder kastenförmigen, flüssigkeitsdichten Bauraum, in welchem die Bauplattform (5) angeordnet ist; und ein an dem Bearbeitungskopf (10) angeordnetes, wenigstens zwei jeweils um ihre Längsachse rotierbare Walzen (2) umfassendes Umformwerkzeug (3), wobei wenigstens zwei der Walzen (2) mit ihren Längsachsen zueinander parallel ausgerichtet sind, sodass ein kompressiver Druck entlang einer senkrecht zu den Längsachsen ausgerichteten Linie zwischen den Walzen (2) aufbaubar ist, **dadurch gekennzeichnet, dass**
- das Umformwerkzeug (3) und die Werkstoffzuführeinrichtung (7) unabhängig voneinander von der Steuer- und Regeleinrichtung (9) nach Maßgabe von in der Steuer- und Regeleinrichtung (9) hinterlegten Geometriebeschreibungsdaten bewegbar sind,
- die Walzen (2) zumindest an ihrer Außenseite aus einem Material mit einer hohen Wärmeleitfähigkeit von mehr als 200 W/(m · K) bestehen, und
- die Walzen (2) in einem Temperaturbereich von 150 °C bis wenigstens 650 °C elektrisch temperierbar sind.

7. Anlage nach Anspruch 6, **dadurch gekennzeichnet, dass** die Bauplattform (5) um eine Rotationsachse (6) rotierbar ist, wobei die Umformeinrichtung (3) wenigstens ein Paar von Walzen (2) aufweist, deren Längsachse parallel zu der Rotationsachse (6) der Bauplattform (5) ausgerichtet ist.

8. Anlage nach Anspruch 6 oder 7, **dadurch gekennzeichnet, dass** die Bauplattform (5) ein Kanalsystem beinhaltet, durch welches eine Wärmeübertragungsflüssigkeit leitbar ist.

9. Anlage nach einem der Ansprüche 6 bis 8, **dadurch gekennzeichnet, dass** das Material mit einer hohen Wärmeleitfähigkeit eine Keramik ist.

## Claims

1. Method for the combined additive manufacture and shaping of metal shaped bodies (1), wherein
- the shaped body (1) is produced by melting at least one metal material (4) and depositing the material in a molten phase (4.1) in layers according to geometry description data;
- the deposited material (4.1) is shaped by means of a shaping tool (3), comprising at least two rollers (2) which are moved up to the shaped body, according to the geometry description data,
**characterised in that**
- the deposited material (4.1) is shaped after it has solidified on the underlying layer (1.2), wherein the rollers (2) of the shaping tool (3) are moved immediately after the depositing and solidification of the deposited material (4.1) up to a position to be shaped onto the shaped body;
- the shaping is performed **in that** at least one roller pair, which consists respectively of two of the rollers (2), is guided laterally along the most recently deposited layer (1.1) and at least one of the underlying layers (1.2), wherein the layers (1.1, 1.2) are arranged between the two rollers (2) of the roller pair exerting pressure with a component in horizontal direction onto the solidified layers (1.1, 1.2);
- the temperature of the shaped body (1) is controlled at least during the shaping,
- wherein the regulation of the temperature is controlled or supported by means of a heat transfer fluid which at least partly surrounds the shaped body (1).

2. Method according to claim 1, **characterised in that** the shaping tool (3) used comprises at least three rollers (2), wherein during the shaping one roller (2) is guided in perpendicular direction onto the solidified layers (1.1, 1.2),in a pressing manner over the latter.

3. Method according to any of the preceding claims, **characterised in that** at the same time as the depositing the shaping takes place in a position directly behind the solidification front of the molten deposited material (4.1).

4. Method according to any of the preceding claims, **characterised in that** the shaped body (1) is produced on a building platform (5) which is rotatable about an axis of rotation, wherein the molten deposited material (4.1) is shaped after its solidification by rotating the building platform (5).

5. Method according to any of the preceding claims, **characterised in that** in an alternating sequence at least two different materials (4) are deposited, wherein the shaping is performed between each change of the material (4).

6. Apparatus for the combined additive manufacture and shaping of metal shaped bodies (1) by means of depositing at least one meltable sheet metal, wire or powdered material (4), having a building platform (5), a processing head (10) which can be moved at least in perpendicular direction having at least one material feeding device (7) for supplying the material (4), a power source for melting the material (4), a controlling and regulating device (9), a trough-like or box-like, fluid-tight space, in which the building platform (5) is arranged; and a shaping tool (3) which is arranged on the processing head (10) and comprises at least two rollers (2) rotatable respectively about their longitudinal axis, wherein at least two of the rollers (2) are aligned in parallel to one another with their longitudinal axes so that a compressive pressure can be built up along a line, aligned perpendicularly to the longitudinal axes, between the rollers (2),
**characterised in that**
- the shaping tool (3) and the material feeding device (7) can be moved independently of one another by the controlling and regulating device (9) according to geometry description data saved in the controlling and regulating device (9),
- the rollers (2) are made at least on their outer side from a material with a high thermal conductivity of more than 200 W/(m . K) and
- the temperature of the rollers (2) can be controlled electrically in a temperature range of 150 °C to at least 650 °C.

7. Apparatus according to claim 6, **characterised in that** the building platform (5) can be rotated about an axis of rotation (6), wherein the shaping device (3) has at least one pair of rollers (2), the longitudinal axis of which is aligned to be parallel to the axis of rotation (6) of the building platform (5).

8. Apparatus according to claim 6 or 7, **characterised in that** the building platform (5) includes a channel system through which a heat transferring fluid can be conducted.

9. Apparatus according to any of claims 6 to 8, **characterised in that** the material having a high thermal conductivity is a ceramic material.

## Revendications

1. Procédé pour la fabrication additive combinée à une mise en forme de corps de moule métalliques (1), dans lequel
- le corps de moule (1) est fabriqué par fusion d'au moins un matériau métallique (4) et dépôt du matériau dans la phase en fusion (4.1) par couche conformément aux données de description géométrique ;
- le matériau déposé (4.1) est mis en forme au moyen d'un outil de mise en forme (3), comprenant au moins deux rouleaux (2) approchés des corps de moule, conformément aux données de description géométrique,
**caractérisé en ce que**
- le matériau déposé (4.1) est mis en forme après sa solidification sur la couche sous-jacente (1.2), dans lequel les rouleaux (2) de l'outil de mise en forme (3) sont approchés directement après le dépôt et la solidification du matériau déposé (4.1) au niveau d'une position à mettre en forme du corps de moule ;
- la mise en forme a lieu par le fait qu'au moins une paire de rouleaux, qui est formée de respectivement deux rouleaux (2), est guidée latéralement le long de la dernière couche déposée (1.1) et d'au moins une des couches sous-jacentes (1.2), dans lequel les couches (1.1, 1.2) sont agencées entre les deux rouleaux (2) de la paire de rouleaux exerçant une pression avec une composante dans la direction horizontale sur les couches solidifiées (1.1, 1.2) ;
- le corps de moule (1) est mis à température au moins pendant la mise en forme,
- dans lequel la mise à température est réalisée ou soutenue au moyen d'un fluide caloporteur entourant au moins en partie le corps de moule (1).

2. Procédé selon la revendication 1, **caractérisé en ce que** l'outil de mise en forme (3) utilisé comprend au moins trois rouleaux (2), dans lequel lors de la mise en forme un rouleau (2) est guidé dans la direction verticale sur les couches solidifiées (1.1, 1.2) en pressant sur celles-ci.

3. Procédé selon l'une quelconque des revendications précédentes, **caractérisé en ce que** la mise en forme a lieu au niveau d'une position directement derrière le front de solidification du matériau déposé en fusion (4.1) en même temps que le dépôt.

4. Procédé selon l'une quelconque des revendications précédentes, **caractérisé en ce que** le corps de moule (1) est fabriqué sur une plateforme de construction (5) pouvant tourner autour d'un axe de rotation, dans lequel le matériau déposé en fusion (4.1) est mis en forme après sa solidification par rotation de la plateforme de construction (5).

5. Procédé selon l'une quelconque des revendications précédentes, **caractérisé en ce qu'**au moins deux matériaux (4) différents sont déposés en alternance, dans lequel la mise en forme a lieu entre chaque changement de matériau (4).

6. Installation pour la fabrication additive combinée à une mise en forme de corps de moule métalliques (1) au moyen du dépôt d'au moins un matériau fusible en forme de tôle, de fil ou de poudre (4), présentant une plateforme de construction (5), une tête d'usinage (10) mobile au moins dans la direction verticale avec au moins un dispositif d'amenée de matériau (7) pour l'amenée du matériau (4), une source d'énergie pour la fusion du matériau (4), un dispositif de commande et de régulation (9), un espace de construction étanche au fluide, en forme de cuve ou de caisse, dans lequel la plateforme de construction (5) est agencée ; et un outil de mise en forme (3) agencé au niveau de la tête d'usinage (10), comprenant au moins deux rouleaux (2) pouvant tourner respectivement autour de leur axe longitudinal, dans laquelle au moins deux des rouleaux (2) sont orientés parallèlement l'un à l'autre avec leurs axes longitudinaux, de sorte qu'une pression compressive peut être générée le long d'une ligne orientée perpendiculairement aux axes longitudinaux entre les rouleaux (2),
**caractérisée en ce que**
- l'outil de mise en forme (3) et le dispositif d'amenée de matériau (7) sont mobiles indépendamment l'un de l'autre par le dispositif de commande et de régulation (9) conformément aux données de description géométrique enregistrées dans le dispositif de commande et de régulation (9),
- les rouleaux (2) se composent au moins sur leur côté extérieur d'un matériau avec une grande conductivité thermique de plus de 200 W/(m · K), et
- les rouleaux (2) peuvent être mis à température électriquement dans une plage de température de 150 °C à au moins 650 °C.

7. Installation selon la revendication 6, **caractérisée en ce que** la plateforme de construction (5) peut tourner autour d'un axe de rotation (6), dans laquelle le dispositif de mise en forme (3) présente au moins une paire de rouleaux (2), dont l'axe longitudinal est orienté parallèlement à l'axe de rotation (6) de la plateforme de construction (5).

8. Installation selon la revendication 6 ou 7, **caractérisée en ce que** la plateforme de construction (5) contient un système de canaux, par lequel un fluide caloporteur peut être conduit.

9. Installation selon l'une quelconque des revendications 6 à 8, **caractérisée en ce que** le matériau à conductivité thermique élevée est une céramique.
